# EUROPÄISCHE PATENTSCHRIFT

(11) **EP 0 616 004 B1**
(45) Veröffentlichungstag und Bekanntmachung des Hinweises auf die Patenterteilung: **20.01.1999**
(21) Anmeldenummer: 94102669.2
(22) Anmeldetag: 22.02.1994
(51) Int. Cl.: C08J 9/00, C08L 27/18, B01D 71/36

(54) **Poröses Polytetrafluorethylen (PTFE) sowie ein Verfahren zu seiner Herstellung**
Porous polytetrafluoroethylene and production process
Polytetrafluoroethylène poreux et son procédé de préparation

(30) Priorität: 16.03.1993 DE 4308368
(43) Veröffentlichungstag der Anmeldung: 21.09.1994
(73) Patentinhaber: W.L. GORE & ASSOCIATES GmbH, 85640 Putzbrunn (DE)
(72) Erfinder: Bürger, Wolfgang, Dr., D-81825 München (DE); Witzko, Richard, D-85521 Riemerling (DE)
(74) Vertreter: Kador & Partner

(56) Entgegenhaltungen:
- EP-A- 0 138 524
- EP-A- 0 197 781
- DE-A- 4 117 391
- DATABASE WPI Section Ch, Week 8039, Derwent Publications Ltd., London, GB; Class A94, AN 80-68677C & JP-A-55 105 865 (NITTO ELECTRIC IND KK) 14. August 1980
- DATABASE WPI Section Ch, Week 8918, Derwent Publications Ltd., London, GB; Class A14, AN 89-134164 & JP-A-1 078 823 (SUMITOMO ELEC IND KK) 24. März 1989

## Beschreibung

Die Erfindung betrifft ein neues poröses Polytetrafluorethylen sowie ein Verfahren zu dessen Herstellung.

Mikroporöse Polytetrafluorethylene (PTFE) sowie deren Herstellung wurden erstmals in der US-PS 3,953,566 beschrieben. Sie bestehen aus reinem hochmolekularem Emulsionspolymerisat, das pastenextrudiert wird. Die US-PS 5,026,513 beschreibt die Herstellung eines strukturstabilen expandierten mikroporösen PTFE, wobei koagulierte Dispersionen als Ausgangsmaterial verwendet werden. Diese Produkte fanden aufgrund ihrer chemischen und physikalischen Stabilität vielfältige Einsatzgebiete.

Der Stand der Technik beschreibt auch Modifizierungen des PTFE hinsichtlich bestimmter chemischer bzw. physikalischer Eigenschaften. So beschreibt die US-PS 5,098,625 ein Verfahren zur Herstellung poröser PTFE-Membranen mit höherer Dichte, verbesserter Flexibilität und reduziertem Kaltfluß, bei dem ebenfalls koagulierte Dispersionen verwendet werden. Diese Art von PTFE weist jedoch eine verschlechterte Zugfestigkeit auf.

DE-A-4117391 beschreibt ein poröses Durchlaufdiaphragma für Elektrolysezellen und ein Verfahren zu seiner Herstellung. Dabei wird einem Gemisch von bestrahltem und unbestrahltem PTFE ein herauslösbarer Porenbildner, wie z.B. NaCL, trokken zugemischt und das resultierende Gemisch auf die gewünschte Enddicke gewalzt. Nach Sintern des Walzproduktes wird der Porenbildner durch ein geeignetes Lösungsmittel herausgelöst.

In der EP-A-138524 werden Zusammensetzungen aus einem Fluorpolymer und einem bestrahlten PTFE offenbart, die sich durch eine verbesserte Schmelzformbarkeit auszeichnen.

Zur Verbesserung der Wärmebeständigkeit und Dimensionsstabilität und zur Erhöhung der Porosität wird in der EP 418 155 vorgeschlagen, hochmolekulares PTFE partiell anzusintern und erst danach zu recken.

Des weiteren beschreibt die US-PS 5,064,593 eine PTFE-Mehrschichtenmembran, die sich aus einer kleinporigen Filterschicht aus einem nicht-fibrillierenden PTFE-Feinpulver und einer offenporigen Stütz schicht aus hochmolekularem PTFE zusammensetzt. Jede Schicht muß dabei separat hergestellt werden und die separaten Schichten müssen im Laufe der Verarbeitung miteinander verbunden werden.

Die US-PS 5,102,921 beschreibt ein PTFE-Material hoher Porosität und mit großem Porendurchmesser, das aus einer Mischung eines hochmolekularen und eines niedermolekularen PTFE-Feinpulvers erhalten wird. Diese Produkte weisen jedoch eine geringe mechanische Festigkeit auf.

Diesbezüglich schlägt die US-PS 5,087,641 ein Verfahren vor, bei dem eine mikroporöse Membran nachträglich mit einer Dispersion eines gesinterten oder bestrahlten PTFE-Materials modifiziert wird. Die Einlagerung der zusätzlichen Komponente in die Porenzwischenräume führt zu einem gewissen Verstärkungseffekt.

Eine Modifizierung der Eigenschaften porösen PTFE-Materials mittels Zumischen niedermolekularen PTFEs ist insbesondere im Hinblick auf die Wiederverwertung von Abfallpolymerisaten wünschenswert.

Allgemein ist festzustellen, daß hochmolekulare Emulsionspolymerisate des PTFE während des Pastenextrusionsschrittes und der Reckung fähig sind Fibrillenstrukturen auszubilden. Niedermolekulare PTFE-Typen sind dagegen nicht reckbar und bilden somit auch keine Fibrillenstrukturen aus.

Des weiteren ist in Fachkreisen bekannt, daß bestrahlte PTFE-Typen stets eine verminderte mechanische Festigkeit aufweisen.

Ausgehend von diesen Problemen ist es Aufgabe der vorliegenden Erfindung, ein poröses Polytetrafluorethylen bereitzustellen, das durch Einarbeitung perfluorierter nichtreckbarer Polymere in hochmolekulares PTFE-Material hergestellt werden kann und bei dem gleichzeitig die guten mechanischen Eigenschaften des hochmolekularen PTFE Materials, insbesondere im Hinblick auf Zugfestigkeit, Reißfestigkeit und Bruchdehnung erhalten sind.

Gegenstand der vorliegenden Erfindung ist ein poröses Polytetrafluorethylen, das erhältlich ist, indem Polytetrafluorethylen strahlenchemisch abgebaut wird, das abgebaute Polytetrafluorethylen mit hochmolekularem Emulsionspolymerisat gemischt wird und die Mischung extrudiert, verstreckt und gegebenenfalls gesintert wird.

Bevorzugte Ausführungsformen der Erfindung, die nachfolgend näher beschrieben werden, ergeben sich aus den Unteransprüchen 2 bis 7. Gegenstand der Erfindung ist auch ein Verfahren zur Herstellung der erfindungsgemäßen Polytetrafluorethylene.

Es hat sich überraschender Weise gezeigt, daß diese porösen Polytetrafluorethylene ausgezeichnete Bruchdehnungs- und Reißfestigkeitswerte besitzen. Die Zugfestigkeit und Reißfestigkeit sind höher als bei der Verwendung von reinem hochmolekularem PTFE. Dieses war insbesondere bei der Verwendung von strahlenchemisch abgebautem PTFE nicht zu erwarten. Beladungs- und Beschichtungsexperimente an den gereckten Compounds haben gezeigt, daß die erfindungsgemäßen Polytetrafluorethylene bessere Ergebnisse liefern als herkömmliche PTFE.

Es kann sowohl strahlenchemisch abgebautes reines und ungesintertes PTFE, als auch strahlenchemisch abgebautes gesintertes PTFE-Abfallmaterial, z.B. GORE-TEX^{R}, eingesetzt werden. Das eingesetzte Emulsionspolymerisat kann ein Homo- oder Copolymerisat des PTFE sein. Es hat sich gezeigt, daß die mittlere Teilchengröße des strahlenchemisch abgebauten PTFE, dessen chemische Zusammensetzung und Ausgangskristallinität, welche durch die Art der Bestrahlung beeinflußt werden können, von Einfluß auf die Festigkeit des resultierenden Mischpolymerisates ist. Die Porosität und mittlere Porengröße von Membranen kann durch den Zusatz der strahlenabgebauten Komponente, dem Gleitmittelanteil, der Mischprozedur und dem Extrusionsdruck beeinflußt werden.

Unter einem hochmolekularen PTFE-Emulsionspolymerisat werden Polymerisate verstanden, die bevorzugt ein zahlenmittleres Molekulargewicht Mₙ von 2 x 10⁶ bis 50 x 10⁶ aufweisen. Im allgemeinen werden diese Typen zur Herstellung expandierter poröser Membranen verwendet.

Das strahlenchemisch abgebaute perfluorierte Polymer weist im allgemeinen ein zahlenmittleres Molekulargewicht Mₙ von unter 10⁶ auf. Solche Polymerisate zeigen keine Reckbarkeit.

Der strahlenchemische Abbau erfolgt mit energiereicher Strahlung, vorzugsweise mit Hilfe von Elektronenstrahlen. Die Bestrahlung kann in Gegenwart von Luftsauerstoff oder unter Inertgas-Atmosphäre (z.B. N₂) durchgeführt werden und es können Emulsions- oder Suspenionspolymerisate bzw. PTFE-Abfälle eingesetzt werden. Vorzugsweise unterwirft man die Abbauprodukte einer Temperung bei einer Temperatur oberhalb von 150°C, um Radikale, niedermolekulare Spaltprodukte und Fluorwasserstoff zu entfernen.

Besonders günstig erweist sich die Einwirkung einer Energiedosis im Bereich von 10 bis 3000 kGy, um eine maximale Kristallinität und enge Molmassenverteilung im PTFE zu erzielen. In besonders bevorzugter Weise beträgt die Energiedosis zwischen 50 kGy bis 800 kGy.

Strahlenchemisch abzubauende PTFE-Abfallmaterialien können alle bekannten PTFE-Typen sein. Es wird bevorzugt, das Ausgangsmaterial einer Reinigunsprozedur zu unterziehen und einer Vorbestrahlung zur Versprödung auszusetzen. Der Strahlenabbau erfolgt dann weiter unter vergleichbaren Bedingungen wie bei reinen PTFE-Materialien. In jedem Fall bewirkt die Bestrahlung ein Verspröden des PTFE-Materials, wodurch es sich besser vermahlen läßt. Damit kann eine sehr niedrige Teilchengröße erreicht werden. Das Molekulargewicht des PTFE-Materials wird stark erniedrigt und seine Kristallinität stark erhöht.

Der Anteil der nichtreckbaren, strahlenabgebauten Komponente, der mit dem Gleitmittel dem hochmolekularen PTFE zugemischt wird, beträgt 1 bis 50 Masseprozent, bezogen auf die Gesamtmasse an PTFE, vorzugsweise jedoch 4 bis 30 Masseprozent. Beträgt der Anteil mehr als 50 % gibt es Probleme bei der Verarbeitung zu porösen Strukturen.

Die Partikelgröße des strahlenabgebauten Materials liegt zwischen 0,1 µm und 100 µm , vorzugsweise zwischen 0,2 µm und 20 µm. Größere Partikel führen zur Veränderung der Oberflächenstruktur des Produktes und initiieren Defekte im Knoten-/ Fibrillenbereich.

Als Gleitmittel können die verschiedensten zur Pastenextrusion gebräuchlichen Flüssigkeiten eingesetzt werden. Beispiele für Gleitmittel sind Dieselöle, Kohlenwasserstoffe, Toluol, Silikonöl, Fluorkarbone, Polymerlösungen, Mischungen davon und Wasser bzw. wässrige Tensidlösungen. Für die in den nachfolgenden Beispielen angeführten Versuche wurde ein i-Paraffinöl mit einem Siedebereich von 181 bis 212°C eingesetzt. Der Anteil des Gleitmittels, bezogen auf die PTFE-Mischung, ist abhängig von Art und Länge der zugesetzten abgebauten Komponente und dem gewünschten Extrusionsdruck. Üblicherweise beträgt er 10 bis 50 Masseprozent, bezogen auf die Mischung, vorzugsweise 20 bis 40 Masseprozent.

Der Mischprozeß des hochmolekularen PTFE-Emulsionspolymerisates mit der strahlenabgebauten Komponente und dem Gleitmittel kann variabel gestaltet werden. Z.B. wird in einem Trockenmischer das hochmolekulare PTFE mit der strahlenabgebauten Komponente vorgemischt, nach einer gewissen Zeit das Gleitmittel zudosiert und nachgemischt. Die Mischzeit ist variabel und richtet sich im wesentlichen nach der Art der strahlenabgebauten Komponente. Sie beträgt vorzugsweise 10 Minuten bis 180 Minuten. Jedenfalls wird bis zur vollständigen Homogenisierung gemischt. Eine andere Variante geht von der Zudosierung der strahlenabgebauten Komponente zum Gleitmittel aus, die homogene Dispersion wird dann zum PTFE-Emulsionspolymerisat gegeben. Eine weitere Möglichkeit ist die Herstellung einer homogenen Mikropulverdispersion der strahlenabgebauten Komponente, die danach zu einer PTFE-Dispersion zugegeben wird. Man fällt anschließend, z.B. mit einem Polyelektrolyten, die Dispersion aus, trennt Wasser ab, trocknet und versetzt nunmehr die Mischung mit einem Gleitmittel.

Die Herstellung des gepreßten Formkörpers, die Pastenextrusion mit nachfolgendem Kalandrierschritt sowie das Entfernen des Gleitmittels, der Verstreckungsschritt und letztendlich die Versinterung sind im Deutschen Patent 24 17 901 und der US-PS 5,102,921 ausführlich beschrieben. Auf deren Inhalt wird voll inhaltlich Bezug genommen. Insbesondere kann die Verstreckung sowohl uniaxial als auch biaxial erfolgen.

Obwohl der Mechanismus zur Herstellung gereckter poröser PTFE-Materialien mit verbesserten mechanischen Eigenschaften aus hochmolekularem, fibrillenbildenden PTFE und nichtreckbaren, strahlenabgebauten, perfluorierten Polymerisaten nicht geklärt ist, kann angenommen werden, daß das hochmolekulare PTFE die Basistruktur für das Produktmaterial bildet. Die strahlenabgebauten perfluorierten Polymerisate besitzen ein niedriges Molekulargewicht und einen im Vergleich zum Basismaterial niedrigeren Schmelzpunkt. Bei höheren Temperaturen besitzen die kürzerkettigen Moleküle eine höhere Beweglichkeit und sind in der Lage, an die Oberfläche der Knoten zu migrieren bzw. werden in den hochkristallinen Bereichen umorientiert und unterliegen einem Ordnungseinfluß im nicht aufgeschmolzenen Polymerbereich der Fibrillenstruktur. Als Ergebnis beobachtet man eine Anreicherung von Endgruppen der so zugesetzten kurzkettigen Polymerisate an der Knotenoberfläche, einen verbreiterten Hauptschmelzpunkt im DSC (Differential Scanning Calorimetrie = Differentialthermoanalyse) und eine höhere Schmelzwärme bzw. Rekristallisationswärme der Compound-Materialien im Vergleich zu Materialien aus reinem hochmolekularem PTFE. Es ist anzunehmen, daß hochgeordnete Mikrokristallitstrukturen entstehen, die eine verbesserte Festigkeit der Zusammensetzung bewirken.

Die erhöhte Anzahl von Endgruppen in der gereckten Membran bei Zusätzen von elektronenbestrahltem PTFE führt zusätzlich zu einer Veränderung der Oberflächeneigenschaften der expandierten PTFE. Man ist in der Lage Membranen herzustellen, die eine verbesserte Affinität zu Haftvermittlern und ionischen und polaren Verbindungen aufweisen. Das ist von Vorteil, da es die Einmischbarkeit von Füllstoffen, die Metallisierung solcher Membranen und die Beständigkeit von Beschichtungssystemen, z.B. mit polymeren Überzügen auf ePTFE, vereinfacht. Diese Effekte sind in den nachfolgenden Beispielen 9 und 10 verdeutlicht.

Nachfolgend wird die Erfindung durch Beispiele näher erläutert. Es wurden folgende chemische und physikalische Untersuchungsmethoden angewendet:

### Partikelgröße

Die Daten der Partikelgröße für kommerziell erhältliche Polymere werden den Datenblättern entnommen. Ergänzende Messungen erfolgen an einem Partikelmeßgerät der Firma Leeds & Northrup Microtac, FRA Model 9250, Particle Size Analyzer.

### Mittlerer Porendurchmesser / bubble point

Die Ermittlung des mittleren Porendurchmessers erfolgt durch Messungen am COULTER POROMETER. Der Bubble Point wurde ermittelt, indem der Druck bestimmt wird, bei dem Luftblasen eine sich in i-Propanol befindende Membran durchdringen.

### Gurley

Es wird die Zeit bestimmt, in welcher 100 cm³ Luft durch eine Fläche von 6,45 cm² unter einem Druck von 1,2 kPa dringen.

### DSC (Differential Scanning Calorimetry)

Es wurde das Gerät Mettler DSC 20 benutzt. 10 mg der Probe wurden eingewogen, die Heizrate betrug 10 K/min.

**REM** = Rasterelektronenmikroskopie

### Infrarotspektroskopie

Die Messungen erfolgten am IF 66 oder Fa. Bruker

### Bruchdehnung / Reißfestigkeit (Maschinenrichtung)

Die Messungen erfolgen am INSTRON (Instron Corporation Serie IX automatisches Materialprüfsystem 1.09) nach DIN 53888.

### Mikroporöse Membran aus elektronenbestrahltem PTFE

### Beispiel 1

5784 g PTFE (Molekulargewicht > 5 x 10⁶) wurden mit 1020 g elektronenbestrahltem Emulsionspolymerisat (der Schmelzflußindex entspricht dem Mikropulver TF 9202) und 2,16 1 Paraffinöl gemischt und bei 36 bar in einen Formkörper verpreßt. Eine anschließende Pastenextrusion und eine Kalandrierung ergaben einen PTFE-Film von 0,15 mm Dicke. Dieser Film wurde durch eine Heizzone bei 230°C zur Entfernung des Gleitmittels geführt, in Längsrichtung 1:4 gereckt und bei 370°C gesintert.

Die Eigenschaften dieser Membran sind in Tabelle 1 dargestellt.

### Beispiel 2

6396 g PTFE (Molekulargewicht > 5 x 10⁶) wurden mit 408 g elektronenbestrahltem Emulsionspolymerisat (der Schmelzflußindex entspricht dem Mikropulver TF 9202) und 2,16 1 Paraffinöl gemischt und bei 36 bar in einen Formkörper verpreßt. Eine anschließende Pastenextrusion und eine Kalandrierung ergaben einen PTFE-Film von 0,155 mm Dicke. Dieser Film wurde durch eine Heizzone bei 230°C zur Entfernung des Gleitmittels geführt, in Längsrichtung 1:4 gereckt und bei 370°C gesintert.

Die Eigenschaften dieser Membran sind in Tabelle 1 dargestellt.

### Beispiel 3

6396 g PTFE (Molekulargewicht > 5 x 10⁶) wurden mit 408 g elektronenbestrahltem (600 kGy) Emulsionspolymerisat TF 2025, und 2,22 1 Paraffinöl gemischt und bei 36 bar in einen Formkörper verpreßt. Eine anschließende Pastenextrusion und eine Kalandrierung ergaben einen PTFE-Film von 0,152 mm Dicke. Dieser Film wurde durch eine Heizzone bei 230°C zur Entfernung des Gleitmittels geführt, in Längsrichtung 1:4 gereckt und bei 370°C gesintert.

Die Eigenschaften dieser Membran sind in Tabelle 1 dargestellt.

### Beispiel 4

6396 g PTFE (Molekulargewicht > 5 x 10⁶) wurden mit 408 g elektronenbestrahltem (400 kGy) expandiertem PTFE (GORE-TEX^{R}) und 2,22 l Paraffinöl gemischt und bei 36 bar in einen Formkörper verpreßt. Eine anschließende Pastenextrusion und eine Kalandrierung ergaben einen PTFE-Film von 0,16 mm Dicke. Dieser Film wurde durch eine Heizzone bei 230°C zur Entfernung des Gleitmittels geführt, in Längsrichtung 1:4 gereckt und bei 370°C gesintert.

Die Eigenschaften dieser Membran sind in Tabelle 1 dargestellt.

### Mikroporöse Membran mit strahlenchemisch abgebautem kommerziellem PTFE

### Beispiel 5

5784 g PTFE (Molekulargewicht > 5 x 10⁶) wurden mit 1020 g PTFE-Mikropulver MP1200 und 2,07 l Paraffinöl gemischt und bei 36 bar in einen Formkörper verpreßt. Eine anschließende Pastenextrusion und eine Kalandrierung ergaben einen PTFE-Film von 0,147 mm Dicke. Dieser Film wurde durch eine Heizzone bei 230°C zur Entfernung des Gleitmittels geführt, in Längsrichtung 1:4 gereckt und bei 370°C gesintert.

Die Eigenschaften dieser Membran sind in Tabelle 1 dargestellt.

### Beispiel 6

6396 g PTFE (Molekulargewicht > 5 x 10⁶) wurden mit 408 g PTFE-Mikropulver MP1200 und 2,19 l Paraffinöl gemischt und bei 14 bar in einen Formkörper verpreßt. Eine anschließende Pastenextrusion und eine Kalandrierung ergaben einen PTFE-Film von 0,15 mm Dicke. Dieser Film wurde durch eine Heizzone bei 230°C zur Entfernung des Gleitmittels geführt, in Längsrichtung 1:4 gereckt und bei 370°C gesintert.

Die Eigenschaften dieser Membran sind in Tabelle 1 dargestellt.

### Beispiel 7

6396 g PTFE (Molekulargewicht > 5 x 10⁶) wurden mit 408 g PTFE-Mikropulver MP1300 und 2,19 l Paraffinöl gemischt und bei 36 bar in einen Formkörper verpreßt. Eine anschließende Pastenextrusion und eine Kalandrierung ergaben einen PTFE-Film von 0,16 mm Dicke. Dieser Film wurde durch eine Heizzone bei 230°C zur Entfernung des Gleitmittels geführt, in Längsrichtung 1:4 gereckt und bei 370°C gesintert.

Die Eigenschaften dieser Membran sind in Tabelle 1 dargestellt.

### Vergleichsbeispiel A

27220 g PTFE (Molekulargewicht > 5 x 10⁶) wurden mit 5,95 kg Paraffinöl gemischt und bei 36 bar in einen Formkörper verpreßt. Eine anschließende Pastenextrusion sion und eine Kalandrierung ergaben einen PTFE-Film von 0,19 mm Dicke. Dieser Film wurde durch eine Heizzone bei 230°C zur Entfernung des Gleitmittles geführt, in Längsrichtung 1:4 gereckt und bei 370°C gesintert.

Die Eigenschaften dieser Membran sind in Tabelle 1 dargestellt.

Die Reinheit der erhaltenen Produkte ist am Beispiel 4 mit Hilfe der anliegenden FT-IR und REM-Aufnahmen gezeigt.

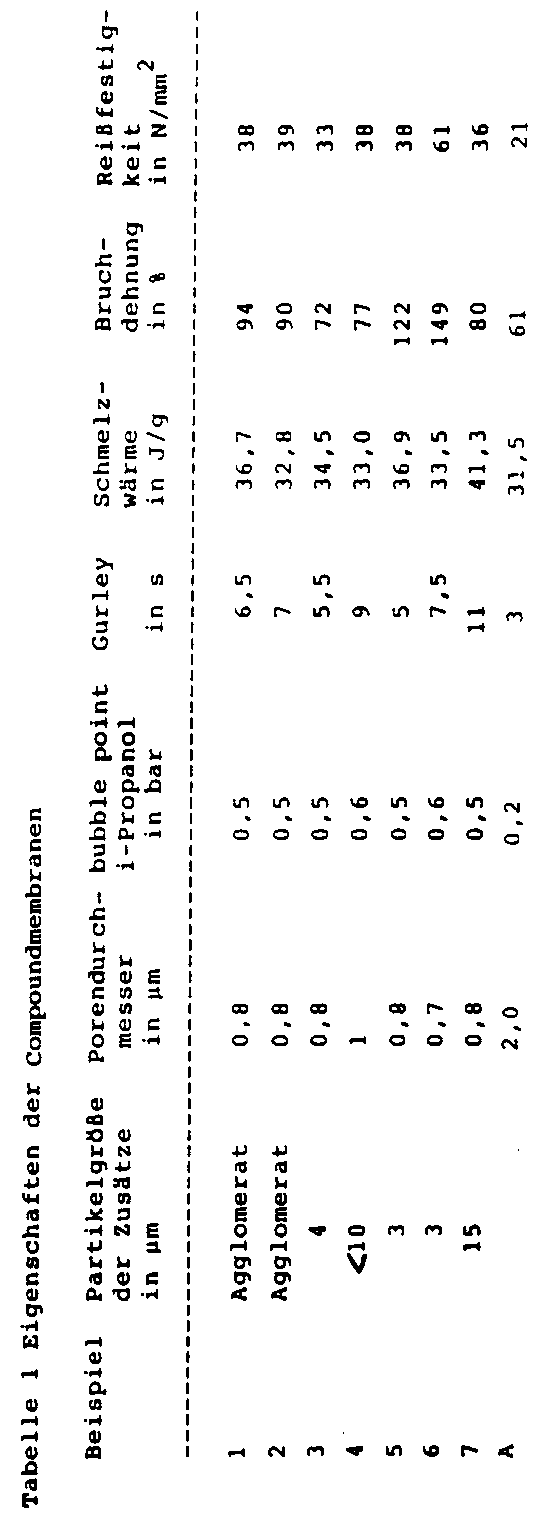

### Mikroporöse ungesinterte Membran mit elektronenbestrahlten PTFE

### Beispiel 8

106,6 g TF 2025 wurden mit 6,8 g elektronenbestrahlten (400 kGy) expandiertem PTFE (GORE-TEX®) und 34 ml Paraffinöl vermischt und zu einem Formkörper in 15 s bei 3,5 bar verpreßt. Eine anschließende Pastenextrusion bei 176 bar und Reckung (25:1) bei 300°C ergaben einen Film von 0,18 mm Dicke und 13 mm Breite. Die Ergebnisse sind in Tabelle 2 zusammengefaßt.

### Vergleichsbeispiel B

113,4 g TF 2025 wurden mit 32,5 ml Paraffinöl vermischt und zu einem Formkörper in 15 s bei 3,5 bar verpreßt. Eine anschließende Pastenextrusion bei 181 bar und Reckung (25:1) bei 300°C ergaben einen Film von 0,15 mm Dicke und 15 mm Breite. Die Ergebnisse sind in Tabelle 2 zusammengefaßt.

**Tabelle 2:**

| **Eigenschaften der ungesinterten Compoundmembranen** | | | | |
|---|---|---|---|---|
| Beispiel | Partikelgröße d. Zusätze in µm | Schmelzwärme 2.heat in J/g | Bruchdehnung in % | Reißfestigkeit in N/mm2 |
| 8 | < 10 | 29,6 | 25 | 12,3 |
| B | 1 | 27,0 | 18 | 10,8 |

### Mikroporöse biaxial gereckte Membranen mit elektronenbestrahltem PTFE

### Beispiel 9

544 g elektronenbestrahltes expandiertes PTFE (GORE-TEX^{R}, 400 kGy) wurden in 2,22 l Paraffinöl dispergiert und zu 6260 g PTFE (Molekulargewicht > 5 x 10⁶) dosiert. Man vermischt alle Komponenten und verpreßt bei 36 bar zu einem Formkörper. Eine anschließende Pastenextrusion und eine Kalandrierung ergaben einen PTFE-Film von 0,2 mm Dicke. Dieser Film wurde durch eine Heizzone bei 230°C zur Entfernung des Gleitmittels geführt, in Längsrichtung 1:4 sowie in Querrichtung 1:6 gereckt und bei 370°C gesintert.

### Vergleichsbeispiel C

27220 g PTFE (Molekulargewicht > 5 x 10⁶) wurden mit 5,90 kg Paraffinöl gemischt und bei 36 bar in einen Formkörper verpreßt. Eine anschließende Pastenextrusion und eine Kalandrierung ergaben einen PTFE-Film von 0,19 mm Dicke. Dieser Film wurde durch eine Heizzone bei 230°C zur Entfernung des Gleitmittels geführt, in Längsrichtung 1:4 und in Querrichtung 1:6 gereckt und bei 370°C gesintert.

### Beispiel 10

An gereckten PTFE wurden Beladungsexperimente mit Polykationen, Beschichtungen mit Silanen und Oberflächenuntersuchungen durchgeführt (siehe Tab. 3-6), die bestätigen, daß gereckte Compounds mit bestrahltem PTFE-Zusatz eine erhöhte Affinität zu anderen Polymeren, Beschichtungssystemen bzw. Haftvermittlern aufweisen und eine verminderte Oleophobie bzw. Hydrophobie aufweisen.

**Tabelle 3:**

| **Beladbarkeit/Umladung der Membranen mit Polyelektrolyten** | | | |
|---|---|---|---|
| Membran | Strömungspotential in MV | Polykationbeladung* in % | Zeta-Potential nach Beladung in mV |
| A | -17,0 | 0,7 | +20,0 |
| 4 | -19,9 | 0,9 | +17,2 |
| 5 | -26,8 | 2,1 | +17,9 |

| | | | |
|---|---|---|---|
| * Eine vorbenetzte Membran wird bei 60°C und 10 min in eine wäßrige 0,1n Polyallylaminlösung gegeben und bei 130°C getrocknet. | | | |

**Tabelle 4:**

| **Beladbarkeit/Reaktion der Membran mit Haftvermittlern** | | |
|---|---|---|
| Membran | Silan* | Massezuwachs in % |
| A | A 1100(0,ln) | 0 |
| 4 | A 1100(0,1n) | 1,0 |
| 5 | A 1100(0,1n) | 1,3 |
| A | GF91(0,1n) | 0 |
| 4 | GF91(0,1n) | 1,3 |
| 5 | GF91(0,1n) | 1,6 |

| | | |
|---|---|---|
| *A1100: H₂NCH₂CH₂NH(CH₂)₃Si(OCH₃)₃ GF91: H₂N(CH₂)₃Si(OC₂H₅)₃ | | |

Die Membran wird mit i-Propanol benetzt und danach für 30 min in eine 0,ln Shellsollösung (Siedepunkt 60-95°C) des Silans bei 60°C gegeben. Man quetscht die Membran ab, spült mit Wasser und trocknet bei 130^C.

**Tabelle 5:**

| **Affinität/Adhäsion der Membranen zu Beschichtungssystemen** | | | |
|---|---|---|---|
| Membran | Beschichtung | Dicke der Beschichtung | Peeltest |
| C | Polyetherurethan | 10µm | Beschichtung reißt ab |
| 9 | Polyetherurethan | 10µm | Membran wird zerstört |

**Tabelle 6:**

| **Oberflächeneigenschaften der Membran** | | | |
|---|---|---|---|
| Membranbezeichnung | Strömungspotential der Membran in mV | Kontaktwinkel gegen Wasser | Kontaktwinkel gegen CH₂I₂ |
| A (uniaxial) | -17 | 128 | 116 |
| C (biaxial) | -21,8 | 138 | 117 |
| 1 (uniaxial) | -18,2 | 126 | 111 |
| 4 (uniaxial) | -19,9 | 121 | 111 |
| 9 (biaxial) | -21,1 | 130 | 116 |
| 5 (uniaxial) | -26,8 | 122 | 106 |

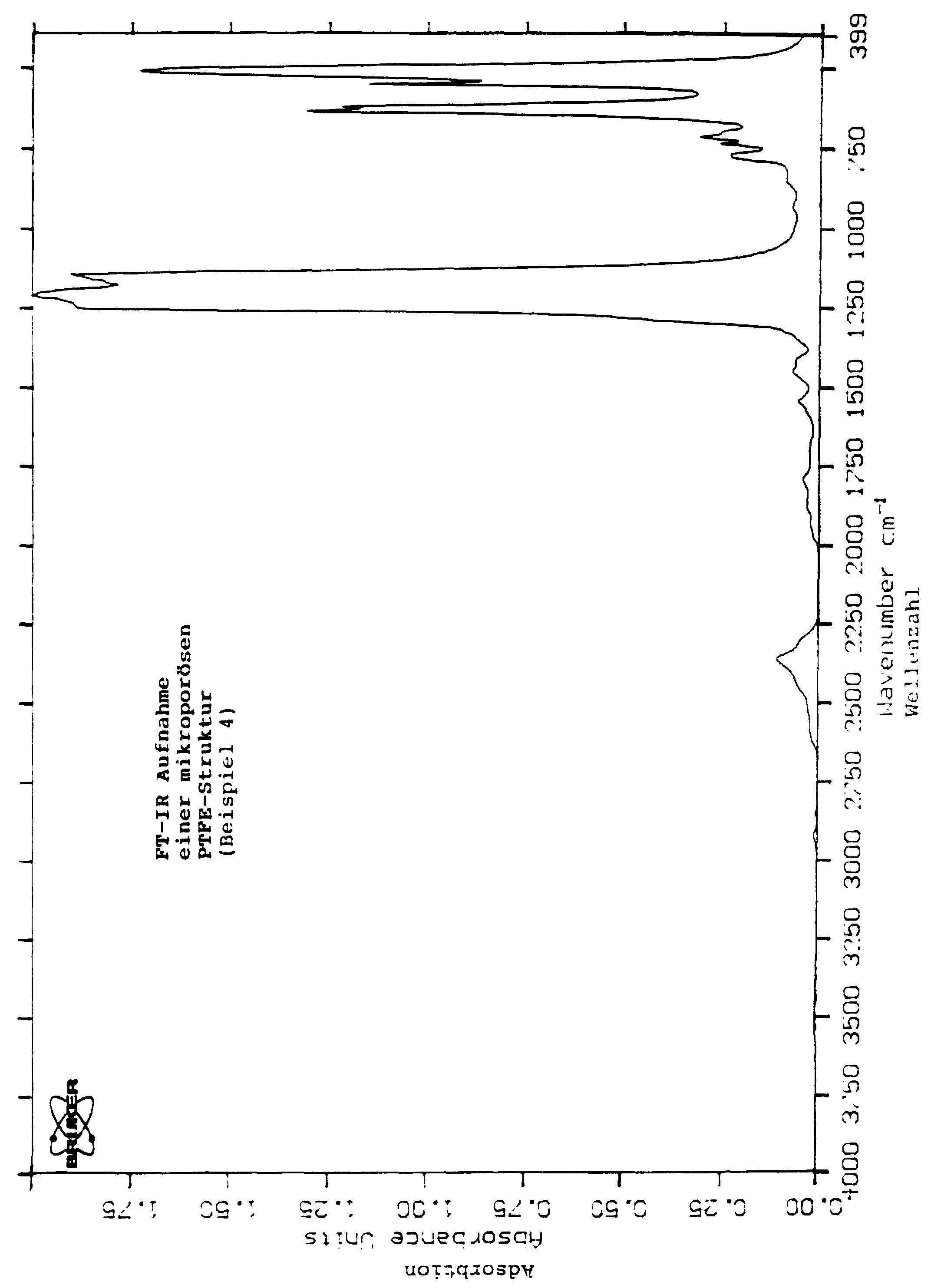

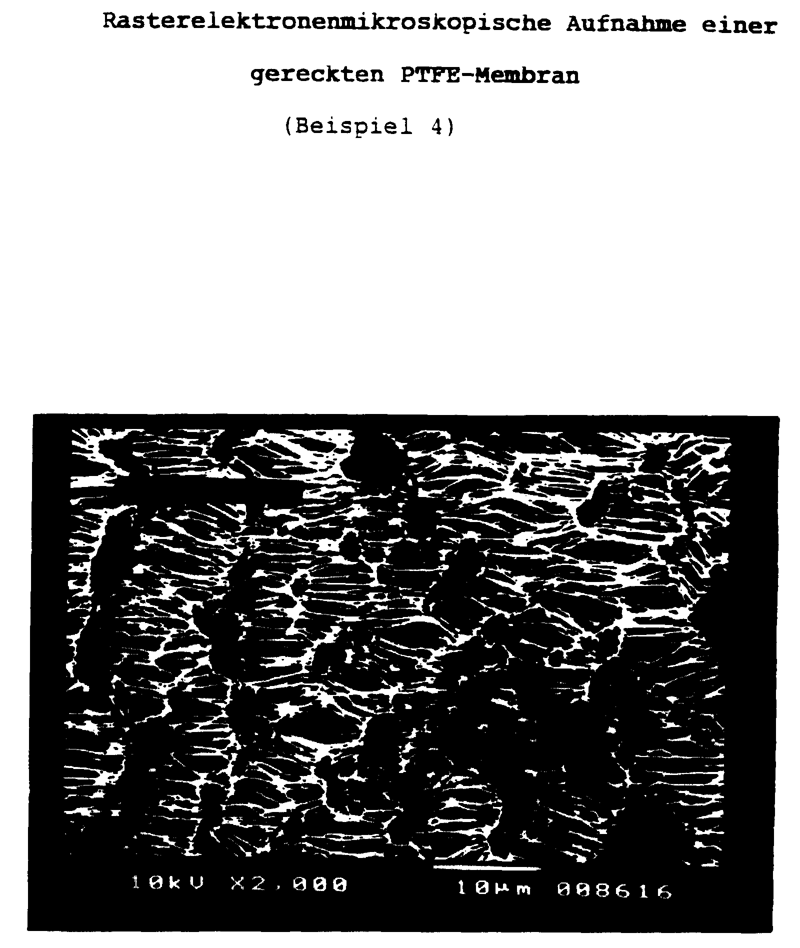

## Patentansprüche

1. Poröses Polytetrafluorethylen, erhältlich indem Polytetrafluorethylen strahlenchemisch abgebaut wird, das abgebaute Polytetrafluorethylen mit Homo- oder Copolymerisat des Polytetrafluorethylen mit einem zahlenmittleren Molekulargewicht zwischen 2 x 10⁶ und 50 x 10⁶ gemischt wird und die Mischung extrudiert, verstreckt und gegebenenfalls gesintert wird.

2. Polytetrafluorethylen nach Anspruch 1, **dadurch gekennzeichnet**, daß das Polytetrafluorethylen mittels Elektronenstrahlen abgebaut wird.

3. Polytetrafluorethylen nach Anspruch 1 oder 2, **dadurch gekennzeichnet**, daß man für den strahlenchemischen Abbau eine Energiedosis im Bereich von 10 bis 3000 kGy wählt.

4. Polytetrafluorethylen nach einem der Ansprüche 1 bis 3, **dadurch gekennzeichnet**, daß das Polytetrafluorethylen bis zu einem zahlenmittleren Molekulargewicht von unter 10⁶ abgebaut wird.

5. Polytetrafluorethylen nach einem der Ansprüche 1 bis 4, **dadurch gekennzeichnet**, daß man das abgebaute Polytetrafluorethylen in einer Menge von 1 bis 50 %, bezogen auf die Gesamtmasse, zumischt.

6. Polytetrafluorethylen nach einem der Ansprüche 1 bis 5, **dadurch gekennzeichnet**, daß das abgebaute Polytetrafluorethylen eine Partikelgröße von 0,1 bis 100 µm aufweist.

7. Verfahren zur Herstellung von porösem Polytetra-fluorethylen, **dadurch gekennzeichnet**, daß Polytetrafluorethylen strahlenchemisch abgebaut wird, das abgebaute Polytetra-fluorethylen mit Homo- oder Copolymerisat des Polytetrafluorethylen mit einem zahlenmittleren Molekulargewicht zwischen 2 x 10⁶ und 50 x 10⁶ gemischt wird und die Mischung extrudiert, verstreckt und gegebenenfalls gesintert wird.

8. Verfahren nach Anspruch 7, **dadurch gekennzeichnet**, daß das Polytetrafluorethylen mittels Elektronenstrahlen abgebaut wird.

9. Verfahren nach Anspruch 7 oder 8, **dadurch gekennzeichnet**, daß man für den strahlenchemischen Abbau eine Energiedosis im Bereich von 10 bis 3000 kGy wählt.

10. Verfahren nach einem der Ansprüche 7 bis 9, **dadurch gekennzeichnet**, daß das Polytetrafluorethylen bis zu einem zahlenmittleren Molekulargewicht von unter 10⁶ abgebaut wird.

11. Verfahren nach einem der Ansprüche 7 bis 10, **dadurch gekennzeichnet**, daß man das abgebaute Polytetrafluorethylen in einer Menge von 1 bis 50 %, bezogen auf die Gesamtmasse, zumischt.

12. Verfahren nach einem der Ansprüche 7 bis 11, **dadurch gekennzeichnet**, daß das abgebaute Polytetrafluorethylen eine Partikelgröße von 0,1 bis 100 µm aufweist.

## Claims

1. Porous polytetrafluoroethylene, obtainable by using radiation chemistry to degrade polytetrafluoroethylene, mixing the degraded polytetrafluoroethylene with a homo- or copolymer of polytetrafluoroethylene having a number-average molecular weight of from 2 x 10⁶ to 50 × 10⁶, and extruding, orienting and, if desired, sintering the mixture.

2. Polytetrafluoroethylene according to Claim 1, characterized in that the polytetrafluoroethylene is degraded by means of electron beams.

3. Polytetrafluoroethylene according to Claim 1 or 2, characterized in that the energy dose selected for the degradation using radiation chemistry is in the range from 10 to 3000 kGy.

4. Polytetrafluoroethylene according to one of Claims 1 to 3, characterized in that the polytetrafluoroethylene is degraded as far as a number-average molecular weight of less than 10⁶.

5. Polytetrafluoroethylene according to one of Claims 1 to 4, characterized in that the degraded polytetrafluoroethylene is admixed in amounts of from 1 to 50%, based on the total weight.

6. Polytetrafluoroethylene according to one of Claims 1 to 5, characterized in that the degraded polytetrafluoroethylene has a particle size of from 0.1 to 100 µm.

7. Process for preparing porous polytetrafluoroethylene, characterized in that radiation chemistry is used to degrade polytetrafluoroethylene, the degraded polytetrafluoroethylene is mixed with a homo- or copolymer of polytetrafluoroethylene having a number-average molecular weight of from 2 × 10⁶ to 50 × 10⁶, and the mixture is extruded, oriented and, if desired, sintered.

8. Process according to Claim 7, characterized in that the polytetrafluoroethylene is degraded by means of electron beams.

9. Process according to Claim 7 or 8, characterized in that, for the degradation using radiation chemistry, the energy dose selected is in the range from 10 to 3000 kGy.

10. Process according to one of Claims 7 to 9, characterized in that the polytetrafluoroethylene is degraded as far as a number-average molecular weight of less than 10⁶.

11. Process according to one of Claims 7 to 10, characterized in that the degraded polytetrafluoroethylene is admixed in amounts of from 1 to 50%, based on the total weight.

12. Process according to one of Claims 7 to 11, characterized in that the degraded polytetrafluoroethylene has a particle size of from 0.1 to 100 µm.

## Revendications

1. Polytétrafluoroéthylène poreux, (susceptible d'être obtenu) en décomposant du polytétrafluoroéthylène par chimie sous rayonnement, en mélangeant le polytétrafluoroéthylène décomposé avec un produit d'homo- ou de copolymérisation du polytétrafluoroéthylène ayant une masse moléculaire moyenne en nombre entre 2 x 10⁶ et 50 x 10⁶ et en extrudant le mélange, en l'étirant et éventuellement en le frittant.

2. Polytétrafluoroéthylène selon la revendication 1, caractérisé en ce que l'on décompose le polytétrafluoroéthylène au moyen de faisceaux d'électrons.

3. Polytétrafluoroéthylène selon la revendication 1 ou 2, caractérisé en ce que l'on choisit pour la décomposition chimique sous rayonnement une dose d'énergie dans l'intervalle de 10 à 3000 kGy.

4. Polytétrafluoroéthylène selon l'une des revendications 1 à 3, caractérisé en ce que le polytétrafluoroéthylène est décomposé jusqu'à une masse moléculaire moyenne en nombre de moins de 10⁶.

5. Polytétrafluoroéthylène selon l'une des revendications 1 à 4, caractérisé en ce qu'on mélange le polytétrafluoroéthylène décomposé en une quantité de 1 à 50%, par rapport à la masse globale.

6. Polytétrafluoroéthylène selon l'une des revendications 1 à 5, caractérisé en ce que le polytétrafluoroéthylène décomposé présente une taille de particules de 0,1 à 100 µm.

7. Procédé de préparation de polytétrafluoroéthylène poreux, caractérisé en ce que, le polytétrafluoroéthylène est décomposé par chimie sous rayonnement, le polytétrafluoroéthylène est mélangé avec un produit d'homo- ou de copolymérisation du polytétrafluoroéthylène ayant une masse moléculaire moyenne en nombre entre 2 x 10⁶ et 50 x 10⁶ et en ce que le mélange est extrudé, étiré et éventuellement fritté.

8. Procédé selon la revendication 7, caractérisé en ce que le polytétrafluoroéthylène est décomposé au moyen de faisceaux d'électrons.

9. Procédé selon la revendication 7 ou 8, caractérisé en ce qu'on choisit pour la décomposition par chimie sous rayonnement une dose d'énergie dans l'intervalle de 10 à 3000 kGy.

10. Procédé selon l'une des revendications 7 à 9, caractérisé en ce que le polytétrafluoroéthylène est décomposé jusqu'à une masse moléculaire moyenne en nombre de moins de 10⁶.

11. Procédé selon l'une des revendications 7 à 10, caractérisé en ce qu'on mélange le polytétrafluoroéthylène décomposé en une quantité de 1 à 50%, par rapport à la masse globale.

12. Polytétrafluoroéthylène selon l'une des revendications 7 à 11, caractérisé en ce que le polytétrafluoroéthylène décomposé présente une taille de particules de 0,1 à 100 µm.
